(19) Europäisches Patentamt / European Patent Office / Office européen des brevets

(11) **EP 4 682 668 A1**

(12) **EUROPEAN PATENT APPLICATION**
published in accordance with Art. 153(4) EPC

(43) Date of publication:
**21.01.2026 Bulletin 2026/04**

(21) Application number: **24769941.6**

(22) Date of filing: **12.03.2024**

(51) International Patent Classification (IPC):
**G05F 1/573** (2006.01)  **H02H 3/08** (2006.01)

(52) Cooperative Patent Classification (CPC):
**G05F 1/56; G05F 1/573; H02H 3/08;** Y02B 70/10

(86) International application number:
**PCT/CN2024/081279**

(87) International publication number:
**WO 2024/188250 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023  CN 202310233492**

(71) Applicant: **Vanchip (Tianjin) Technology Co. Ltd**
**Tianjin 300457 (CN)**

(72) Inventors:
• **WANG, Yongshou**
  **Tianjin 300457 (CN)**
• **LIANG, Shengyu**
  **Tianjin 300457 (CN)**
• **CHEN, Cheng**
  **Tianjin 300457 (CN)**

(74) Representative: **Wang, Bo**
  **Panovision IP**
  **Ebersberger Straße 3**
  **85570 Markt Schwaben (DE)**

(54) **LOW DROPOUT REGULATOR WITH OVER-CURRENT PROTECTION, AND CHIP AND ELECTRONIC DEVICE**

(57)    A low dropout regulator (LDO) with over-current protection, and a chip and an electronic device. The LDO comprises an LDO main circuit (100), a high-precision current sampling circuit (200), and an over-current protection control loop (300), wherein an output end of the LDO main circuit (100) is connected to an input end of the high-precision current sampling circuit (200), an output end of the high-precision current sampling circuit (200) is connected to an input end of the over-current protection control loop (300), and an output end of the over-current protection control loop (300) is connected to both the LDO main circuit (100) and the high-precision current sampling circuit (200), so as to form a closed control loop. When the current of a load exceeds a current-limiting value, the LDO can effectively protect a power transistor (MP0) of the LDO main circuit (100) and the load, and a hard shutoff phenomenon of a system may not occur.

FIG. 1

EP 4 682 668 A1

## Description

## BACKGROUND

**Technical Field**

The present disclosure relates to a low dropout regulator with over-current protection, also relates to an integrated circuit chip including the low dropout regulator, and a corresponding electronic device, and belongs to the technical field of integrated circuits.

**Related Art**

A low dropout regulator (LDO for short) circuit is a regulated power supply with excellent performance such as micro power consumption, low noises, and a high power supply rejection ratio, and is widely applied to various integrated circuits and electronic devices. Therefore, a reliability of supplying power by the LDO circuit is a very important performance indicator. In practical use, after a load current of the LDO circuit exceeds its rated current, excessive heat will be dissipated by the power transistor, which may result in a phenomenon of burnout in a power supply system. However, setting of an over-current protection function in the LDO circuit will greatly improve the reliability of supplying power by the LDO circuit.

In addition, in a radio frequency front-end module of a communication system, a power amplifier imposes higher requirements on the over-current protection function of an LDO module. It not only requires relatively high precision of over-current protection of an LDO, but also requires that when the current drawn by the power amplifier exceeds its maximum rated current, an output current of the LDO is the maximum rated current of the power amplifier while ensuring that an output power of the LDO gradually decreases with an increase of the current drawn by a load.

In the Chinese Patent Application No. 201710012599.4, an over-current protection circuit for a low dropout regulator is disclosed. The over-current protection circuit includes a current sampling circuit, a current comparison circuit, and a pull-up circuit. The current sampling circuit samples a gate-drain voltage of a power transistor of the low dropout regulator, and outputs a sampled current to the current comparison circuit. The current comparison circuit compares a sampled current mirrored by a current mirror with a current of a current source. After an output current of the low dropout regulator exceeds a current protection threshold, the pull-up circuit is turned on by a control voltage outputted by the current comparison circuit, and then the pull-up circuit pulls up a gate terminal voltage of the power transistor of the low dropout regulator, thereby limiting an increase of the output current and playing a role of over-current protection. Although the over-current protection circuit can implement a current limiting function to some extent, there are still two shortcomings: current copy precision is limited and hard shutoff of a system occurs during current limiting.

In the Chinese Patent No. ZL 201610362624.7, an over-current protection circuit of a low dropout regulator is disclosed. The over-current protection circuit includes a sampling transistor, a current comparison circuit, and an over-current protection execution circuit. An output terminal of the over-current protection execution circuit is connected to a drive voltage terminal of a power transistor. The sampling transistor samples an output current and the current comparison circuit determines whether an over-current occurs. The over-current protection execution circuit clamps a gate terminal voltage of the power transistor when the over-current occurs, so that the output current of the power transistor cannot continuously increase, thereby implementing a current limiting function. The over-current protection circuit is simple in structure and relatively low in static power consumption, but still has a disadvantage of poor anti-interference capability.

## SUMMARY

A primary technical problem to be solved by the present disclosure is to provide a low dropout regulator with over-current protection.

Another technical problem to be solved by the present disclosure is to provide an integrated circuit chip including the low dropout regulator, and a corresponding electronic device.

To achieve the foregoing objectives, the present disclosure adopts the following technical solutions:

According to a first aspect of the embodiments of the present disclosure, a low dropout regulator with over-current protection is provided, including an LDO main circuit, a high-precision current sampling circuit, and an over-current protection control loop, where

an output terminal of the LDO main circuit is connected to an input terminal of the high-precision current sampling circuit, an output terminal of the high-precision current sampling circuit is connected to an input terminal of the over-current protection control loop, and an output terminal of the over-current protection control loop is connected to the LDO main circuit and the high-precision current sampling circuit, respectively, so as to form a closed control loop;

the LDO main circuit is configured to generate an output voltage according to an input reference voltage, and provide a load current;

the high-precision current sampling circuit is configured to precisely sample the load current of the LDO main circuit, and convert the load current into a control voltage, and output the control voltage to the over-current protection control loop; and

the over-current protection control loop is configured to turn on the over-current protection control loop when the control voltage reaches a specified value, so as to control the LDO main circuit to implement over-current protection.

Preferably, the LDO main circuit includes a first reference voltage source, an error amplifier, a power transistor, a first feedback resistor, a second feedback resistor, a load capacitor, and a load resistor, where a negative electrode of the first reference voltage source is connected to a ground terminal; a positive electrode of the first reference voltage source is connected to a non-inverting input terminal of the error amplifier; an output terminal of the error amplifier is connected to a gate of the power transistor, and meanwhile, the gate of the power transistor is also connected to the high-precision current sampling circuit and the over-current protection control loop; a source of the power transistor is connected to a power supply terminal, and a drain of the power transistor, as an output terminal, is connected to one end of the first feedback resistor, the load capacitor, and the load resistor on one hand, and is connected to an input terminal of the high-precision current sampling circuit on the other hand; the other end of the first feedback resistor is connected to an inverting input terminal of the error amplifier on one hand, and is connected to the second feedback resistor on the other hand; and the other end of the second feedback resistor, the other end of the load capacitor, and the other end of the load resistor are all connected to the ground terminal.

Preferably, the high-precision current sampling circuit includes a current sampling transistor, a clamping transistor, a first operational amplifier, and a first sampling resistor, a second sampling resistor, a third sampling resistor, and a fourth sampling resistor, where the output terminal of the LDO main circuit is connected to an inverting input terminal of the first operational amplifier; an output terminal of the first operational amplifier is connected to a gate of the clamping transistor; a source of the clamping transistor is connected to a non-inverting input terminal of the first operational amplifier on one hand, and is connected to a drain of the current sampling transistor on the other hand; a source of the current sampling transistor is connected to a power supply terminal; a gate of the current sampling transistor is connected to a gate of the power transistor in the LDO main circuit on one hand, and is connected to the over-current protection control loop on the other hand; a drain of the clamping transistor is connected to the fourth sampling resistor on one hand, and as an output terminal of a first control voltage, is connected to the over-current protection control loop on the other hand; the other end of the fourth sampling resistor is connected to the third sampling resistor; the other end of the third sampling resistor is connected to the second sampling resistor on one hand, and as an output terminal of a second control voltage, is connected to the over-current protection control loop on the other hand; the other end of the second sampling resistor is connected to the first sampling resistor on one hand, and as an output terminal of a third control voltage, is connected to the over-current protection control loop on the other hand; and the other end of the first sampling resistor is connected to the ground terminal.

Preferably, the over-current protection control loop includes a comparator, a second reference voltage source, a second operational amplifier, and a control transistor, where an inverting input terminal of the comparator is connected to an output terminal of the first control voltage of the high-precision current sampling circuit, a non-inverting input terminal of the comparator is connected to a positive electrode of the second reference voltage source, a negative electrode of the second reference voltage source is connected to a ground terminal, and an output terminal of the comparator is connected to an enable terminal of the second operational amplifier; an output terminal of the second control voltage and an output terminal of the third control voltage of the high-precision current sampling circuit are correspondingly connected to an inverting input terminal and a non-inverting input terminal of the second operational amplifier, respectively; an output terminal of the second operational amplifier is connected to a gate of the control transistor; a source of the control transistor is connected to a power supply terminal; and a drain of the control transistor is connected to a gate of the power transistor in the LDO main circuit on one hand, and is connected to a gate of a current sampling transistor in the high-precision current sampling circuit on the other hand.

Preferably, the first operational amplifier and the clamping transistor form a negative feedback structure, so that a drain voltage of the current sampling transistor is equal to the output voltage of the LDO main circuit, and a drain-source voltage of the power transistor is equal to a drain-source voltage of the current sampling transistor.

Preferably, when the load current of the LDO main circuit gradually increases, a sampled current also gradually increases and meanwhile, the first control voltage increases accordingly; and in the over-current protection control loop, when the first control voltage is greater than a second reference voltage, an output level of the comparator changes from a high level to a low level, and the over-current protection control loop starts to operate.

Preferably, when the load current of the LDO main circuit gradually increases, a sampled current also gradually increases; when a difference between the second control voltage and the third control voltage is greater than an offset voltage, an output voltage of the second operational amplifier decreases, so as to allow a gate-source voltage difference of the control transistor to increase, so that a drain current of the control transistor increases and is injected to the gate of the power transistor, resulting in a decrease of a gate-source voltage difference of the power transistor, so as to decrease a current flowing through the power transistor and form a negative feedback control loop for over-current protection.

Preferably, after negative feedback control is performed by the over-current protection control loop, as the sampled current decreases accordingly with a decrease of the load current, the difference between the second control voltage and the third control voltage decreases and is equal to the offset voltage, and the over-current protection control loop is in a steady state.

Preferably, when the offset voltage increases or the resistance value of the second sampling resistor decreases, the current-limiting value of the LDO main circuit increases accordingly.

According to a second aspect of an embodiment of the present disclosure, an integrated circuit chip is provided, including the foregoing low dropout regulator with over-current protection.

According to a third aspect of the embodiments of the present disclosure, an electronic device is provided, including the foregoing low dropout regulator with over-current protection.

Compared with the related technology, the low dropout regulator with over-current protection provided by the present disclosure uses a technical solution that high-precision current sampling is used for generating the control voltage, and the over-current protection control loop is controlled to provide the negative feedback control, thereby implementing effective protection on the power transistor of the LDO main circuit and a load when the load current exceeds the current-limiting value, and a hard shutoff phenomenon of a system may not occur. Therefore, the low dropout regulator with over-current protection provided by the present disclosure has beneficial effects such as skillful and reasonable structural design, low design cost, high current sampling precision, and excellent circuit performance.

## BRIEF DESCRIPTION OF THE DRAWINGS

FIG. 1 is an elementary wiring diagram of a low dropout regulator with over-current protection according to an embodiment of the present disclosure.

FIG. 2 is a diagram of a current limiting effect of a low dropout regulator with over-current protection according to an embodiment of the present disclosure.

FIG. 3 is a schematic diagram of an electronic device using a low dropout regulator according to the present disclosure.

## DETAILED DESCRIPTION

The following describes the technical content of the present disclosure in detail with reference to the accompanying drawings and specific embodiments.

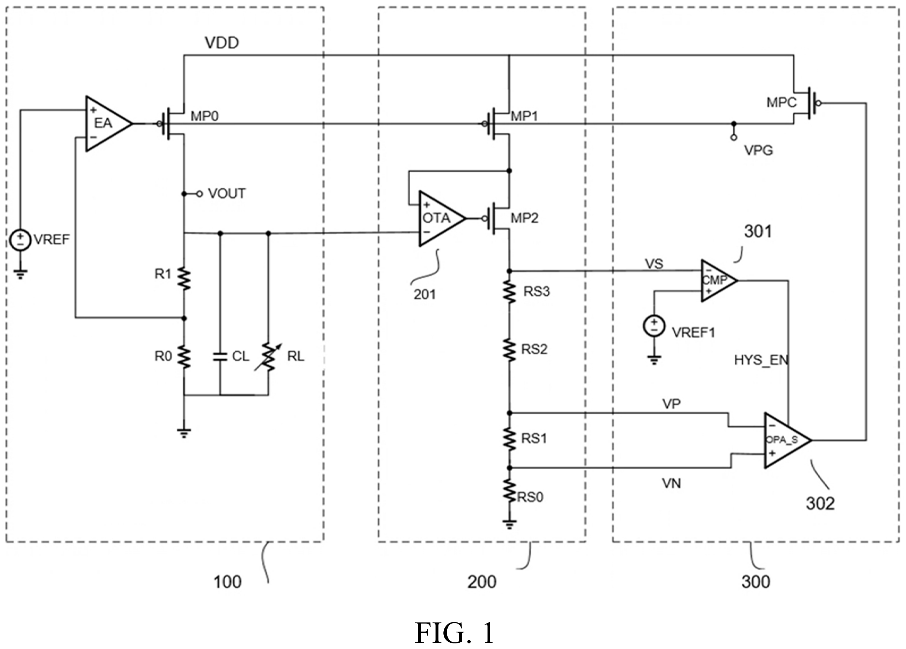

As shown in FIG. 1, a low dropout regulator with over-current protection provided by the embodiments of the present disclosure includes an LDO main circuit 100, a high-precision current sampling circuit 200, and an over-current protection control loop 300. An output terminal of the LDO main circuit 100 is connected to an input terminal of the high-precision current sampling circuit 200, an output terminal of the high-precision current sampling circuit 200 is connected to an input terminal of the over-current protection control loop 300, and an output terminal of the over-current protection control loop 300 is connected to the LDO main circuit 100 and the high-precision current sampling circuit 200, respectively, so as to form a closed control loop.

The LDO main circuit 100 has main functions of generating a steady output voltage according to an input reference voltage, and providing a load current.

The high-precision current sampling circuit 200 has main functions of precisely sampling the load current outputted by the LDO, and converting the load current into a control voltage, and outputting the control voltage to the over-current protection control loop.

The over-current protection (OCP for short) control loop 300 has main functions of turning on an OCP control loop when the control voltage reaches a specified value, and controlling a gate voltage of a power transistor in the LDO main circuit 100 by negative feedback of the OCP control loop, so as to implement the over-current protection for an LDO circuit.

In an embodiment of the present disclosure, the LDO main circuit 100 includes a first reference voltage source VREF, an error amplifier EA, a power transistor MP0, a first feedback resistor R1, a second feedback resistor R0, a load capacitor CL, and a load resistor RL. A negative electrode of the first reference voltage source VREF is connected to a ground terminal. A positive electrode of the first reference voltage source VREF is connected to a non-inverting input terminal of the error amplifier EA. An output terminal of the error amplifier EA is connected to a gate of the power transistor MP0, and meanwhile, the gate of the power transistor MP0 is also connected to the high-precision current sampling circuit 200 and the over-current protection control loop 300. A source of the power transistor MP0 is connected to a power supply terminal VDD, and a drain of the power transistor MP0, as an output terminal VOUT, is connected to one end of the first feedback resistor R1, the load capacitor CL, or the load resistor RL on one hand, and is connected to the input terminal of the high-precision current sampling circuit 200 on the other hand. The other end of the first feedback resistor R1 is connected to an inverting input terminal of the error amplifier EA on one hand, and is connected to the second feedback resistor R0 on the other hand. The other end of the second feedback resistor R0, the other end of the load capacitor CL, and the other end of the load resistor RL are all connected to the ground terminal.

In the LDO main circuit 100, the first feedback resistor R1 and the second feedback resistor R0 form a resistor voltage divider network. An output voltage VOUT of the LDO is divided and then is inputted to the inverting input terminal of the error amplifier EA. A first reference voltage VREF is inputted to the non-inverting input terminal of the error amplifier EA. The error amplifier EA adjusts a gate voltage of the power transistor MP0 according to the level of an input voltage to adapt to a change of the load current, so as to output a steady voltage VOUT. The power transistor MP0 is a main over-current protection object.

Because of a clamping effect of the operational amplifier, the error amplifier EA clamps a node voltage of the resistor voltage divider network formed by the first feedback resistor R1 and the second feedback resistor R0 to the first reference voltage VREF. Therefore, a relationship between the output voltage VOUT of the LDO main circuit and the first reference voltage VREF is:

$$\frac{R0}{R1+R0}V_{OUT} = V_{REF} \tag{1}$$

After the collation, the output voltage VOUT of the LDO is:

$$V_{OUT} = V_{REF}\left(1 + \frac{R1}{R0}\right) \tag{2}$$

where R1 and R0 are resistance values of the first feedback resistor R1 and the second feedback resistor R0, respectively.

When the resistance value of the load resistor RL changes, the load current $I_L$ may also change. At this point, a drain current flowing through the power transistor MP0 is controlled by an LDO loop through adjusting the gate voltage of the power transistor MP0, so as to provide a suitable output current to the load, and regulate the output voltage VOUT of the LDO.

In an embodiment of the present disclosure, the high-precision current sampling circuit 200 includes a current sampling transistor MP1, a clamping transistor MP2, a first operational amplifier 201, and a first sampling resistor RS0, a second sampling resistor RS1, a third sampling resistor RS2, and a fourth sampling resistor RS3. The output terminal of the LDO main circuit 100 is connected to an inverting input terminal of the first operational amplifier 201. An output terminal of the first operational amplifier 201 is connected to a gate of the clamping transistor MP2. A source of the clamping transistor MP2 is connected to a non-inverting input terminal of the first operational amplifier 201 on one hand, and is connected to a drain of the current sampling transistor MP1 on the other hand. A source of the current sampling transistor MP1 is connected to a power supply terminal VDD. A gate of the current sampling transistor MP1 is connected to the gate of the power transistor MP0 in the LDO main circuit 100 on one hand, and is connected to the over-current protection control loop 300 on the other hand. A drain of the clamping transistor MP2 is connected to the fourth sampling resistor RS3 on one hand, and as an output terminal of a first control voltage VS, is connected to the over-current protection control loop 300 on the other hand. The other end of the fourth sampling resistor RS3 is connected to the third sampling resistor RS2. The other end of the third sampling resistor RS2 is connected to the second sampling resistor RS1 on one hand, and as an output terminal of a second control voltage VP, is connected to the over-current protection control loop 300 on the other hand. The other end of the second sampling resistor RS1 is connected to the first sampling resistor RS0 on one hand, and as an output terminal of a third control voltage VN, is connected to the over-current protection control loop 300 on the other hand. The other end of the first sampling resistor RS0 is connected to a ground terminal.

In the high-precision current sampling circuit 200, a width-length ratio of the current sampling transistor MP1 to the power transistor MP0 is 1:N (N > 1). To improve the current sampling precision, the first operational amplifier 201 and the clamping transistor MP2 form a negative feedback structure, so that a drain voltage of the current sampling transistor MP1 is equal to the output voltage VOUT of the LDO. That is, a drain-source voltage of the power transistor MP0 is equal to a drain-source voltage of the current sampling transistor MP1, thereby eliminating a current deviation caused by a channel length modulation effect of the current sampling transistor MP1, and implementing high-precision current sampling.

Since the gate of the current sampling transistor MP1 is connected to the gate of the power transistor MP0, and a width-length ratio therebetween is 1:N, the load current $I_L$ is equal to the drain current of the power transistor MP0 when the feedback on the effect of a static current of the resistor voltage divider network is neglected. Therefore, a drain current of the current sampling transistor MP1 may be represented as:

$$I_{MP1} \approx \frac{1}{N} I_{MP0} \approx \frac{1}{N} I_L \tag{3}$$

where $I_{MP1}$ is a sampled current, $I_L$ is the load current, N is a multiple of width and length dimensions of the power transistor MP0 relative to width and length dimensions of the current sampling transistor MP1, and N > 1.

Equation 3 represents the sampling of the load current $I_L$. After the sampled current flows through a series resistor network formed by the first sampling resistor RS0, the second sampling resistor RS1, the third sampling resistor RS2, and the fourth sampling resistor RS3, the first control voltage VS, the second control voltage VP, and the third control voltage VN are generated, respectively, and are outputted to the over-current protection control loop.

The first control voltage VS, the second control voltage VP, and the third control voltage VN are respectively calculated by:

$$VS = I_{MP1}(R_{S0} + R_{S1} + R_{S2} + R_{S3}) = \frac{I_L}{N}(R_{S0} + R_{S1} + R_{S2} + R_{S3}) \tag{4}$$

$$VP = I_{MP1}(R_{S0} + R_{S1}) = \frac{I_L}{N}(R_{S0} + R_{S1}) \tag{5}$$

$$VN = I_{MP1}R_{S0} = \frac{I_L}{N}R_{S0} \tag{6}$$

where $R_{S0}$, $R_{S1}$, $R_{S2}$ and $R_{S3}$ are resistance values of the first sampling resistor RS0, the second sampling resistor RS1, the third sampling resistor RS2, and the fourth sampling resistor RS3, respectively.

Therefore, when the load current $I_L$ changes, the sampled current $I_{MP1}$ also changes, and meanwhile, the first control voltage VS, the second control voltage VP, and the third control voltage VN all change accordingly.

In an embodiment of the present disclosure, the over-current protection control loop 300 includes a comparator 301, a second reference voltage source VREF1, a second operational amplifier 302, and a control transistor MPC. An inverting input terminal of the comparator 301 is connected to the output terminal of the first control voltage VS of the high-precision current sampling circuit 200. A non-inverting input terminal of the comparator 301 is connected to a positive electrode of the second reference voltage source VREF1. A negative electrode of the second reference voltage source VREF1 is connected to the ground terminal. An output terminal of the comparator 301 is connected to an enable terminal of the second operational amplifier 302. An output terminal of the second control voltage VP and an output terminal of the third control voltage VN of the high-precision current sampling circuit 200 are correspondingly connected to an inverting input terminal and a non-inverting input terminal of the second operational amplifier 302, respectively. An output terminal of the second operational amplifier 302 is connected to a gate of the control transistor MPC. A source of the control transistor MPC is connected to the power supply terminal VDD. A drain of the control transistor MPC is connected to the gate of the power transistor MP0 in the LDO main circuit 100 on one hand, and is connected to the gate of the current sampling transistor MP1 in the high-precision current sampling circuit 200 on the other hand. Meanwhile, a standby terminal VPG is provided at the drain of the control transistor MPC.

In the over-current protection control loop 300, the comparator 301 compares the first control voltage VS with the second reference voltage. When the load current of the LDO gradually increases, the sampled current gradually increases. As a result, the first control voltage VS also increases accordingly. When the first control voltage VS is greater than the second reference voltage, an output level signal HYS_EN of the comparator 301 changes from a high level to a low level. The low-level signal enables the second operational amplifier 302 to start to operate. That is, the OCP control loop starts to operate normally. Meanwhile, when the load current of the LDO gradually increases, the second control voltage VP and the third control voltage VN also increase accordingly. That is, an input voltage of the second operational amplifier 302 increases, so that an output voltage of the second operational amplifier 302 decreases. This further makes a drain current of the control transistor MPC increase. When the drain current of the control transistor MPC completely compensates for an output current of the error amplifier EA in the LDO main circuit 100, the gate voltage of the power transistor MP0 may remain unchanged. When the load current of the LDO continues to increase, the loop of the LDO main circuit 100 loses gains, and negative feedback control of the over-current protection control loop 300 pulls up a gate potential of the power transistor MP0, and clamps the gate potential to a fixed voltage. Therefore, an output current of the LDO cannot continue to increase, thereby implementing the over-current protection function.

The comparator 301 is configured to determine whether the LDO load current reaches a current-limiting value. As can be seen from Equation 4, when the load current $I_L$ increases, the first control voltage VS increases accordingly. When the first control voltage VS is greater than the second reference voltage, the output level signal HYS_EN of the comparator 301 changes from the high level to the low level. The low-level signal enables the second operational amplifier 302 to start to operate. The second operational amplifier 302 has a fixed offset voltage Vos that may be represented as:

$$V_{os} = (I_{limit}/N) \cdot R_{S1} \qquad (7)$$

After the collation, $I_{limit}$ is:

$$I_{limit} = N \cdot V_{os}/R_{S1} \qquad (8)$$

where $I_{limit}$ is the current-limiting value of the LDO main circuit.

The input voltage Vin of the second operational amplifier 302 may be represented as:

$$V_{in} = VP - VN = (I_L/N) \cdot R_{S1} \qquad (9)$$

When the load current $I_L$ increases, the sampled current increases accordingly. When the input voltage Vin is greater than the offset voltage Vos, the output voltage of the second operational amplifier 302 decreases, so as to allow a gate-source voltage difference of the control transistor MPC to increase, so that the drain current of the control transistor MPC increases and is injected to the gate of the power transistor MP0, resulting in a decrease of a gate-source voltage difference of the power transistor MP0. That is, a current flowing through the power transistor MP0 decreases. Therefore, the sampled current $I_{MP1}$ may also decrease, the input voltage $V_{in}$ of the second operational amplifier 302 may decrease and gradually approach the fixed offset voltage Vos, and a negative feedback loop is formed.

Since the power transistor MP0 has a relatively large size, the negative feedback is mainly dominated by the over-current protection control loop when the over-current protection control loop is turned on, and a loop adjusting capability of the LDO main circuit is relatively poor. When the input voltage Vin of the second operational amplifier 302 is equal to the fixed offset voltage Vos, the over-current protection control loop is in a steady state. At this point, the load current $I_L$ is a designed current-limiting value $I_{limit}$.

Therefore, as can be seen from Equation 8, the current-limiting value $I_{limit}$ of the LDO circuit can be changed by changing the offset voltage Vos of the second operational amplifier 302 and the resistance value of the second sampling resistor RS1. When the offset voltage Vos increases and/or the resistance value of the second sampling resistor RS1 decreases, the current-limiting value $I_{limit}$ of the LDO main circuit increases accordingly, and vice versa.

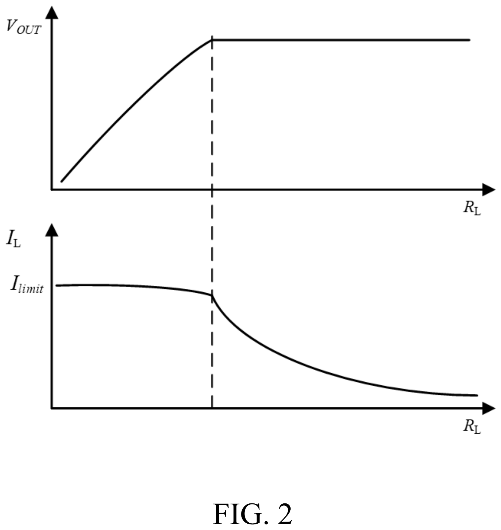

The current limiting effect of the low dropout regulator with over-current protection provided by the embodiments of the present disclosure is shown in FIG. 2. In a normal operating situation (as indicated by the dashed line on the right), the output voltage VOUT of the LDO does not vary with changes of the resistance value of the load resistor and remains a steady output voltage. When the resistance value of the load resistor RL gradually decreases and reaches a value, as indicated by the dashed line in the figure, the load current gradually increases and reaches a current-limiting value $I_{limit}$. At this point, the over-current protection control loop is triggered and starts to operate, and the load current provided by the LDO is restricted from further increase. As the resistance value of the load resistor continuously decreases, the output voltage of the LDO starts to decrease due to current limitation. That is, an output power of the LDO gradually decreases with an increase of a current drawn by a load, thereby implementing effective protection on the power transistor of the LDO main circuit and the load.

The embodiments of the present disclosure further provide an integrated circuit chip. The integrated circuit chip includes the foregoing low dropout regulator with over-current protection, is used in an integrated circuit system as an important constituent part of a power supply module, and provides a steady supply voltage for the system. A specific structure of the low dropout regulator with over-current protection in the integrated circuit chip is not described herein again.

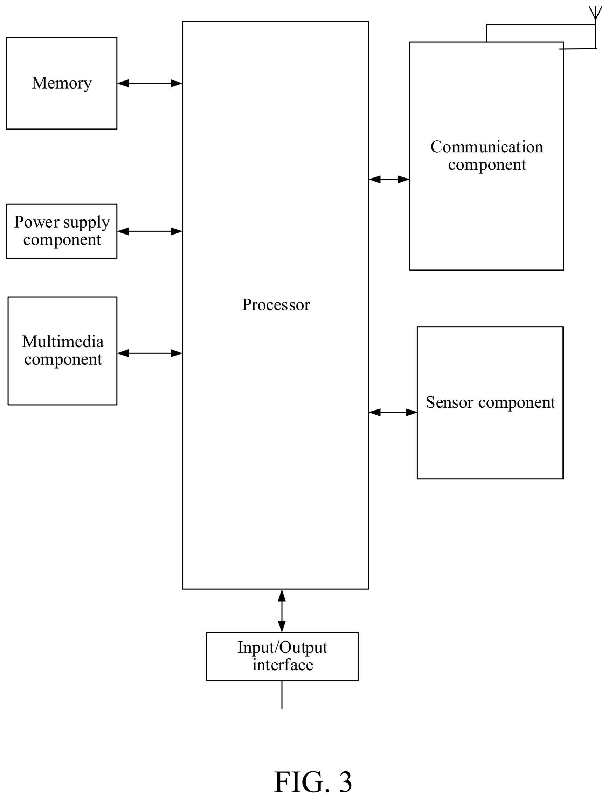

The low dropout regulator with over-current protection provided by the present disclosure may be used in an electronic device as an important constituent part of a power supply component. As shown in FIG. 3, the electronic device includes at least a processor and a memory, and may further include a communication component, a sensor component, a power supply component, a multimedia component, and an input/output interface according to actual requirements. The memory, the communication component, the sensor component, the power supply component, the multimedia component, and the input/output interface are all connected to the processor. The memory may be a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, or the like. The processor may be a central processing unit (CPU), a graphic processing unit (GPU), a field-programmable gate array (FPGA), an application-specific integrated circuit (ASIC), a digital signal processing (DSP) chip, or the like. Other communication components, sensor components, power supply components, multimedia components, and the like may all be implemented by using common parts, and are described in detail herein.

In conclusion, compared with the related technology, the low dropout regulator with over-current protection provided by the present disclosure uses a technical solution that high-precision current sampling is used for generating the control voltage, and the over-current protection control loop is controlled to provide the negative feedback control, thereby implementing effective protection on the of power transistor of the LDO main circuit and the load when the load current exceeds the current-limiting value, and a hard shutoff phenomenon of a system may not occur. Therefore, the low dropout regulator with over-current protection provided by the present disclosure has beneficial effects such as skillful and reasonable structural design, low design cost, high current sampling precision, and excellent circuit performance.

It should be noted that the foregoing multiple embodiments are merely examples, and the technical solutions of the embodiments may be combined, all of which fall within the protection scope of the present disclosure.

In addition, terms "first" and "second" are used merely for the purpose of description, and shall not be construed as indicating or implying relative importance or implying a quantity of indicated technical features. Therefore, features limited by "first" or "second" may explicitly or implicitly include one or more of the features. In the descriptions of the present disclosure, unless otherwise explicitly specified, "multiple" means two or more.

The foregoing describes the low dropout regulator with over-current protection, and the chip and the electronic device provided by the present disclosure in detail. Any obvious modification made by those skilled in the art to the present disclosure without departing from the essence of the present disclosure shall constitute a violation of the patent right of the present disclosure and shall take corresponding legal responsibility.

## Claims

1. A low dropout regulator (LDO) with over-current protection, comprising an LDO main circuit, a high-precision current sampling circuit, and an over-current protection control loop, wherein

    an output terminal of the LDO main circuit is connected to an input terminal of the high-precision current sampling circuit, an output terminal of the high-precision current sampling circuit is connected to an input terminal of the over-current protection control loop, and an output terminal of the over-current protection control loop is connected to the LDO main circuit and the high-precision current sampling circuit, respectively, so as to form a closed control loop;
    the LDO main circuit is configured to generate an output voltage according to an input reference voltage, and provide a load current;
    the high-precision current sampling circuit is configured to precisely sample the load current of the LDO main circuit by using a negative feedback structure formed by an operational amplifier and a P-channel metal-oxide-semiconductor (PMOS) transistor, and convert the load current into a first control voltage, a second control voltage, and a third control voltage, and output the first control voltage, the second control voltage, and the third control voltage to the over-current protection control loop; and
    the over-current protection control loop is configured to employ a comparator to enable a circuit structure used for controlling the operational amplifier according to the inputted first control voltage, second control voltage, and third control voltage, so as to determine whether the LDO load current reaches a current-limiting value, and turn on the over-current protection control loop when the current-limiting value is reached, so as to control a power transistor of the LDO main circuit to implement over-current protection.

2. The low dropout regulator with over-current protection according to claim 1, wherein:
    the LDO main circuit comprises a first reference voltage source, an error amplifier, the power transistor, a first feedback resistor, and a second feedback resistor, wherein a gate of the power transistor is connected to an output terminal of the error amplifier on one hand, and is connected to the input terminal of the high-precision current sampling circuit and the output terminal of the over-current protection control loop on the other hand, so as to implement feedback loop control during normal operation and during the over-current protection.

3. The low dropout regulator with over-current protection according to claim 1, wherein:

    the high-precision current sampling circuit comprises a current sampling transistor, a clamping transistor, a first operational amplifier (201), and a first sampling resistor, a second sampling resistor, a third sampling resistor, and a fourth sampling resistor, wherein
    the output terminal of the LDO main circuit is connected to an inverting input terminal of the first operational amplifier (201); an output terminal of the first operational amplifier (201) is connected to a gate of the clamping transistor; a source of the clamping transistor is connected to a non-inverting input terminal of the first operational amplifier (201) on one hand, and is connected to a drain of the current sampling transistor on the other hand; a source of the current sampling transistor is connected to a power supply terminal; a gate of the current sampling transistor is connected to a gate of the power transistor in the LDO main circuit on one hand, and is connected to the over-current protection control loop on the other hand; a drain of the clamping transistor is connected to the fourth sampling resistor on one hand, and as an output terminal of the first control voltage, is connected to the over-current protection control loop on the other hand; the other end of the fourth sampling resistor is connected to the third sampling resistor; the other end of the third sampling resistor is connected to the second sampling resistor on one hand, and as an output terminal of the second control voltage, is connected to the over-current protection control loop on the other hand; the other end of the second sampling resistor is connected to the first sampling resistor on one hand, and as an output terminal of the third control voltage, is connected to the over-current protection control loop on the other hand; and the other end of the first sampling resistor is connected to a ground terminal.

4. The low dropout regulator with over-current protection according to claim 1, wherein:
the over-current protection control loop comprises the comparator (301), a second reference voltage source, a second operational amplifier (302), and a control transistor, wherein an inverting input terminal of the comparator (301) is connected to an output terminal of the first control voltage of the high-precision current sampling circuit, a non-inverting input terminal of the comparator (301) is connected to a positive electrode of the second reference voltage source, a negative electrode of the second reference voltage source is connected to a ground terminal, and an output terminal of the comparator (301) is connected to an enable terminal of the second operational amplifier (302); an output terminal of the second control voltage and an output terminal of the third control voltage of the high-precision current sampling circuit are correspondingly connected to an inverting input terminal and a non-inverting input terminal of the second operational amplifier (302), respectively; an output terminal of the second operational amplifier (302) is connected to a gate of the control transistor; a source of the control transistor is connected to a power supply terminal; and a drain of the control transistor is connected to a gate of the power transistor in the LDO main circuit on one hand, and is connected to a gate of a current sampling transistor in the high-precision current sampling circuit on the other hand.

5. The low dropout regulator with over-current protection according to claim 3, wherein:
the first operational amplifier (201) and the clamping transistor form a negative feedback structure, so that a drain voltage of the current sampling transistor is equal to the output voltage of the LDO main circuit, and a drain-source voltage of the power transistor is equal to a drain-source voltage of the current sampling transistor.

6. The low dropout regulator with over-current protection according to claim 3, wherein:

the first control voltage VS, the second control voltage VP, and the third control voltage VN generated in the high-precision current sampling circuit satisfy the following equations, respectively:

$$\mathbf{VS} = \frac{\mathbf{I_L}}{\mathbf{N}}(\mathbf{R_{S0}} + \mathbf{R_{S1}} + \mathbf{R_{S2}} + \mathbf{R_{S3}})$$

$$\mathbf{VP} = \frac{\mathbf{I_L}}{\mathbf{N}}(\mathbf{R_{S0}} + \mathbf{R_{S1}})$$

$$\mathbf{VN} = \frac{\mathbf{I_L}}{\mathbf{N}}\mathbf{R_{S0}}$$

wherein $I_L$ is the load current of the LDO main circuit; N is a multiple of width and length dimensions of the power transistor relative to width and length dimensions of the current sampling transistor; and $\mathbf{R_{S0}}$, $\mathbf{R_{S1}}$, $\mathbf{R_{S2}}$ and $\mathbf{R_{S3}}$ are resistance values of the first sampling resistor, the second sampling resistor, the third sampling resistor, and the fourth sampling resistor, respectively.

7. The low dropout regulator with over-current protection according to claim 4, wherein:
when the load current of the LDO main circuit gradually increases, a sampled current also gradually increases and meanwhile, the first control voltage increases accordingly; and in the over-current protection control loop, when the first control voltage is greater than a second reference voltage, an output level of the comparator (301) changes from a high level to a low level, and the over-current protection control loop starts to operate.

8. The low dropout regulator with over-current protection according to claim 4, wherein:

when the load current of the LDO main circuit gradually increases, a sampled current also gradually increases; when a difference between the second control voltage and the third control voltage is greater than an offset voltage, an output voltage of the second operational amplifier (302) decreases, so as to allow a gate-source voltage difference of the control transistor to increase, so that a drain current of the control transistor increases and is injected to the gate of the power transistor, resulting in a decrease of a gate-source voltage difference of the power transistor, so as to decrease a current flowing through the power transistor and form a negative feedback control loop for over-current protection.

9. The low dropout regulator with over-current protection according to claim 8, wherein:

after negative feedback control is performed by the over-current protection control loop, as the sampled current decreases accordingly with a decrease of the load current, the difference between the second control voltage and the third control voltage decreases and is equal to the offset voltage, and the over-current protection control loop is in a steady state, wherein the offset voltage satisfies the following equation:

$$V_{os} = (I_{limit}/N) \cdot R_{S1}$$

wherein Vos is the offset voltage, and $I_{limit}$ is the current-limiting value of the LDO main circuit; N is a multiple of width and length dimensions of the power transistor relative to width and length dimensions of the current sampling transistor; and $R_{S1}$ is a resistance value of a second sampling resistor.

10. The low dropout regulator with over-current protection according to claim 8 or 9, wherein:
when the offset voltage increases or the resistance value of the second sampling resistor decreases, the current-limiting value of the LDO main circuit increases accordingly.

11. An integrated circuit chip, comprising the low dropout regulator with over-current protection according to any one of claims 1 to 10.

12. An electronic device, comprising the low dropout regulator with over-current protection according to any one of claims 1 to 10.

FIG. 1

EP 4 682 668 A1

FIG. 2

FIG. 3

## INTERNATIONAL SEARCH REPORT

| International application No. |
| --- |
| **PCT/CN2024/081279** |

**A. CLASSIFICATION OF SUBJECT MATTER**

G05F1/573(2006.01)i; H02H3/08(2006.01)i

According to International Patent Classification (IPC) or to both national classification and IPC

**B. FIELDS SEARCHED**

Minimum documentation searched (classification system followed by classification symbols)

IPC: G05F,H02M,H02H

Documentation searched other than minimum documentation to the extent that such documents are included in the fields searched

Electronic data base consulted during the international search (name of data base and, where practicable, search terms used)

CNTXT, ENTXTC, VEN: 低压, 线性, 线型, 稳压, 调压, 电压调节, 电压产生, 电压发生, 过流, 过电流, 限流, 电流限制, 限制电流, 比较, 运放, 放大, 使能, 激活, 触发, 启用, 禁用, 开启, 打开, 导通, 启动, 电流, 压降, 压差, 电压, 大于, 高于, 超, 输出, 连, 联, 耦, linear, low, drop+, voltage, current, regulat+, adjust+, stab+, compar+, amplif+, activ+, enabl+, open+, conduct+, start+, generat+, limit+, over+, higher, bigger, more, output, connect+, link+, coupl+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115951752 A (VANCHIP (TIANJIN) TECHNOLOGY CO., LTD.) 11 April 2023 (2023-04-11) <br> claims 1-12, and description, paragraphs 22-45, and figures 1-3 | 1-12 |
| Y | CN 110069092 A (SHANGHAI HUALI MICROELECTRONICS CORPORATION) 30 July 2019 (2019-07-30) <br> description, paragraphs 30-39, and figures 1-3 | 1-12 |
| Y | CN 108768360 A (SUZHOU HUAXIN MICRO-ELECTRONICS CO., LTD.) 06 November 2018 (2018-11-06) <br> description, paragraphs 2-33, and figures 1-3 | 1-12 |
| Y | CN 102263402 A (EVOC INTELLIGENT TECHNOLOGY CO., LTD.) 30 November 2011 (2011-11-30) <br> description, paragraphs 23-39, and figures 3-7 | 1-12 |

☑ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **08 July 2024** | **09 July 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

EP 4 682 668 A1

**INTERNATIONAL SEARCH REPORT**

International application No.

**PCT/CN2024/081279**

### C. DOCUMENTS CONSIDERED TO BE RELEVANT

| Category* | Citation of document, with indication, where appropriate, of the relevant passages | Relevant to claim No. |
|---|---|---|
| A | CN 206250758 U (CHENGDU JINRUIXIN TECHNOLOGY CO., LTD.) 13 June 2017 (2017-06-13) <br> entire document | 1-12 |
| A | US 7612549 B1 (ADVANCED ANALOG TECHNOLOGY, INC.) 03 November 2009 (2009-11-03) <br> entire document | 1-12 |

Form PCT/ISA/210 (second sheet) (July 2022)

15

**INTERNATIONAL SEARCH REPORT**
Information on patent family members

International application No.

**PCT/CN2024/081279**

| Patent document cited in search report | | | Publication date (day/month/year) | Patent family member(s) | | | Publication date (day/month/year) |
|---|---|---|---|---|---|---|---|
| CN | 115951752 | A | 11 April 2023 | None | | | |
| CN | 110069092 | A | 30 July 2019 | US | 2020333816 | A1 | 22 October 2020 |
| | | | | US | 11204613 | B2 | 21 December 2021 |
| CN | 108768360 | A | 06 November 2018 | None | | | |
| CN | 102263402 | A | 30 November 2011 | None | | | |
| CN | 206250758 | U | 13 June 2017 | None | | | |
| US | 7612549 | B1 | 03 November 2009 | TW | 201013355 | A | 01 April 2010 |

Form PCT/ISA/210 (patent family annex) (July 2022)

**EP 4 682 668 A1**

## REFERENCES CITED IN THE DESCRIPTION

### Patent documents cited in the description

- CN 201710012599

- CN 201610362624